# EUROPEAN PATENT APPLICATION

(11) **EP 4 421 671 A1**
(43) Date of publication of application: **28.08.2024**
(21) Application number: 24159487.8
(22) Date of filing: 23.02.2024
(51) Int. Cl.: G06F 30/18, G06F 30/20, H01Q 1/00, H04B 3/52, H04L 41/14, H04W 16/18, G06F 111/20, G06F 113/04

(54) **METHOD FOR DESIGNING ARCHITECTURE FOR MICROWAVE COMMUNICATION AND POWER NETWORKS**

(30) Priority: 23.02.2023 US 202318173348
(71) Applicant: RTX Corporation, Farmington, CT 06032 (US)
(72) Inventor: MANTESE, Joseph V., Farmington, 06032 (US); ZEIDNER, Lawrence E., Farmington, 06032 (US); WOOD, Coy B., Farmington, 06032 (US); AJAMI, Andre M., Farmington, 06032 (US); ZACCHIO, Joseph, Farmington, 06032 (US); GOK, Gurkan, Farmington, 06032 (US); GILSON, Jonathan J., Farmington, 06032 (US); AZZI, Sharbel Elias, Farmington, 06032 (US)
(74) Representative: Dehns

(57) **Abstract**

A computer network and method of designing a microwave communication and/or power system for an application. The system includes a processor (402) configured to obtain a design parameter for the application, determine a plurality of architectures (506) for the application based on the design parameter and an attribute (503) of a component (301) or waveguide (303) of the architecture, determine a value metric for each of the plurality of architectures (506), and determine a reduced set of architectures (508) for the application from the plurality of architectures (506) based on the value metric.

## Description

### BACKGROUND

Exemplary embodiments pertain to the design of a microwave communication and/or power network to fit within a design volume and, in particular, to a system and method for designing a microwave communication and/or power network based on design parameters for an application including attributes of the design volume, the required communication and power distribution, candidate components, and waveguides for the communication and power network.

A microwave communication and power network includes one or more components (e.g., transmitters, receivers, mixers, splitters) interconnected by radiofrequency waveguides. These components and waveguides can be assembled to form a 3D assembly that extends between various locations (i.e., sources) within a design volume, where communication signals and/or power originate, and various other locations (i.e., sinks) within the design volume, where communication signals and/or power are delivered. Every application has its own design parameters and design considerations. In addition, each component of the network, and the waveguide interconnects, has its own attributes, design variables (e.g., component operation, waveguide sizing, and waveguide 3D spatial routing), as well as value metrics which roll up into network-level value metrics. There are many possible ways to communicate information and distribute power using a microwave communication and power network, for a given application, making it difficult to determine an optimal network architecture. Accordingly, there is a desire for a system and method that can design microwave communication and power network architectures and learn new design rules.

### BRIEF DESCRIPTION

Disclosed is a system for designing a microwave communication and/or power system for an application. The system includes a processor configured to obtain a design parameter for the application, determine a plurality of architectures for the application based on the design parameter and an attribute of a component or waveguide of the architecture, determine a value metric for each of the plurality of architectures, and determine a reduced set of architectures for the application from the plurality of architecture based on the value metric.

In an embodiment of the above, the processor is further configured to access a database including types of components and waveguides for the microwave communication and/or power system and create the plurality of architectures using a subset of the plurality of types of components and waveguides that comply with at least one of: (i) microwave communication design rules; and (ii) power network design rules.

In a further embodiment of any of the above, the processor is further configured to determine the value metric for an architecture based on attributes and design variables of the components and waveguides used in the architecture.

In a further embodiment of any of the above, the processor is further configured to compute an objective function for the plurality of architectures based on a function of the value metrics for the plurality of architectures and determine the objective function to find the reduced set of architectures based on requirements of the application.

In a further embodiment of any of the above, the attribute of the component or waveguide is one of: (i) a discrete attribute; (ii) a continuous attribute; and (iii) a hybrid attribute.

In a further embodiment of any of the above, the processor is further configured to select a group of architectures from the plurality of architectures and determine at least one of: (i) a new design rule, (ii) an effect of a design choice on value of the architecture; (iii) how a technology imparts value; and (iv) a strategy for subsequent patent planning.

In a further embodiment of any of the above, the processor is further configured to operate at least one of: (i) an intelligent reasoning module; (ii) a model-based system engineering module that performs an optimization procedure; and (iii) a learning and interpretation module.

Also disclosed is a computer network and/or power system including a processor configured to obtain a design parameter for an application for a microwave communication and/or power system, determine a plurality of architectures for the application based on the design parameter and an attribute of a component or waveguide of the architecture, determine a value metric for each of the plurality of architectures, and determine a reduced set of architectures for the application from the plurality of architecture based on the value metric.

In a further embodiment of any of the above, the processor is further configured to access a database including a plurality of types of components and waveguides for the microwave communication and/or power system and create the plurality of architectures using a subset of the plurality of types of components and waveguides in the database that comply with at least one of: (i) microwave communication design rules; and (ii) power network design rules.

In a further embodiment of any of the above, the processor is further configured to determine the value metric for an architecture based on the design parameter and the attribute of the component and/or waveguide used in the architecture.

In a further embodiment of any of the above, the processor is further configured to compute an objective function for the plurality of architectures based on a function of the value metrics for the plurality of architectures and determine the objective function to find the reduced set of architectures based on a requirement of the application.

In a further embodiment of any of the above, the attribute of the component or waveguide is one of: (i) a discrete attribute; (ii) a continuous attribute; and (iii) a hybrid attribute.

In a further embodiment of any of the above, the processor is further configured to select a group of architectures from the plurality of architectures and determine at least one of: (i) a new design rule, (ii) an effect of a design choice on value of the architecture; (iii) how each technology imparts value; and (iv) a strategy for subsequent patent planning.

In a further embodiment of any of the above, the processor is further configured to operate at least one of: (i) an intelligent reasoning module; (ii) a model-based system engineering module that performs an optimization procedure; and (iii) a learning and interpretation module.

Also disclosed is a method of designing a communication system for a design space, including obtaining a design parameter for an application, determining a plurality of architectures for the application based on the design parameter and an attribute of a component or waveguide of the architecture, determining a value metric for each of the plurality of architectures, and determining a reduced set of architectures for the application from the plurality of architecture based on the value metric.

In an embodiment of the above, the method further comprises obtaining a plurality of components and waveguides for the communication network and/or power system from a database and creating the plurality of architectures using a subset of the plurality of components and waveguides in the database that comply with at least one of: (i) a microwave communication design rule: and (ii) a power network design rule.

In a further embodiment of any of the above methods, the method further comprises determining the value metrics for an architecture based on the design parameter and the attribute of the component and waveguide used in the architecture.

In a further embodiment of any of the above methods, the method further comprises computing an objective function for the plurality of architectures based on a function of the value metrics for the plurality of architectures and determining the objective function to find the reduced set of architectures based on a requirement of the application.

In a further embodiment of any of the above methods, the attribute of the component or waveguide is one of: (i) a discrete attribute; (ii) a continuous attribute; and (iii) a hybrid attribute.

In a further embodiment of any of the above methods, the method further comprises selecting a group of architectures from the plurality of architectures and determining at least one of: (i) a new design rule, (ii) an effect of a design choice on value of the architecture; (iii) how each technology imparts value; and (iv) a strategy for subsequent patent planning.

### BRIEF DESCRIPTION OF THE DRAWINGS

The following descriptions should not be considered limiting in any way. With reference to the accompanying drawings, like elements are numbered alike:
FIG. 1 shows a design volume having a first communication and/or power network therein, for illustrative purposes;
FIG. 2 shows the design volume of FIG. 1 having a second communication and power network therein, for illustrative purposes;
FIG. 3 shows a table showing the design attributes of various types of components and waveguides used in power and communication network architectures;
FIG. 4 shows a computer system for designing architectures for design spaces, in an embodiment;
FIG. 5 shows a flow diagram illustrating operation of the computer system of FIG. 4 to design a microwave power and/or communication system to fit within a design volume, in an illustrative embodiment; and
FIG. 6 shows a flowchart 600 of a method for generating a communication and power network for an application.

### DETAILED DESCRIPTION

A detailed description of one or more embodiments of the disclosed apparatus and method are presented herein by way of exemplification and not limitation with reference to the Figures.

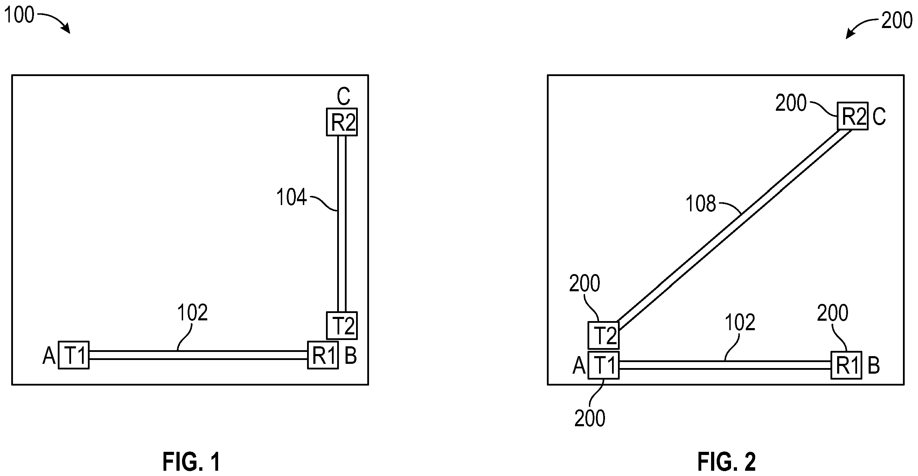

FIG. 1 shows a design volume 100 having a first communication and/or power network therein, for illustrative purposes. A design volume is a 3D region into which the system is to be implemented. A design volume can be a region around an aircraft engine, a region within a missile system, a region within a vehicle, a region within the cabin of an aircraft, etc. For ease of explanation, a 2D view of a simple design volume is shown.

The design volume 100 includes three 3D locations (A, B, C) between which communication is desired. The first communication network can be designed so that location A is in communication with location B and location B is in communication with location C. In order to communicate between location A and location C, location A is equipped with a first transmitter T1, location B is equipped with first receiver R1 and a second transmitter T2 and location C is equipped with a second receiver R2. Thus, a first network can include a first waveguide 102 extending between location A and location B, a second waveguide 104 extending between location B and location C and a smart node or repeater 106 at location B.

FIG. 2 shows the design volume 100 of FIG. 1 having a second communication and power network therein, for illustrative purposes. In the second network, location A includes a first transmitter T1 and a second transmitter T2, while location B includes a first receiver R1, and location C includes a second receiver R2. The second network includes a first waveguide 102 extending between location A and location B and a third waveguide 108 extending between location A and location C. The second network does not need a repeater, but it does include a waveguide (i.e., the second waveguide) which crosses through volume that other system components may need to occupy. Considerations such as this, and the weight, volume, cost and performance of the network of components and waveguides, determine which of the two networks to select for building into the design volume. In addition, as the size and shape of the design volume and the number of relevant power and communication sources and sinks increases, the number of considerations can become very large, making design of an optimal network for the volume very difficult.

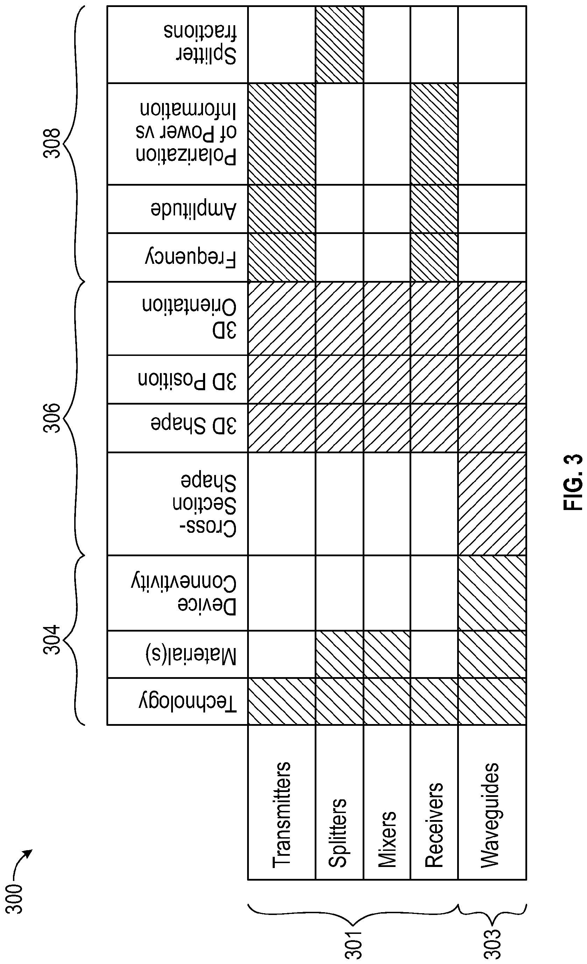

FIG. 3 shows a table 300 showing the design attributes of various types of components and waveguides used in power and communication network architectures. Exemplary types of components 301 (including transmitters, receivers, mixers and splitters) and waveguides 303 are listed along the left side of table 300. The design attributes are listed along the top of the table. A design attribute is an attribute that is specified for the component or waveguide during design of the architecture. The design attributes are grouped into discrete attributes 304, hybrid attributes 306 and continuous attributes 308, according to their degree of continuity.

Discrete attributes 304 are those attributes that have a finite set of discrete choices among which the design process selects one choice for the associated component or waveguide. Exemplary discrete attributes 304 include, but are not limited to, technology (e.g., wave type of signal-generation technology for a transmitter component), material for the splitters, mixers and waveguides, and device connectivity (e.g., connected to components A and B, or B and D).

Hybrid attributes 306 are those attributes that are described by a combination of discrete and continuous values. Exemplary hybrid attributes include, but are not limited to, a waveguide's cross-sectional shape (e.g., rectangular (discrete), length (continuous), width (continuous)) or a component's 3D shape (e.g., cylindrical (discrete), height (continuous), radius (continuous)). A transmitter's or receiver's location is specified by choosing its source of signal or power (e.g., the sensor generating the signal, or the device generating the power (discrete)), and the relative 3D offset from that device, (i.e., delta X, delta Y, and delta Z (continuous)).

Continuous attributes 308 are those attribute that are set to a continuous value by the design process. Exemplary continuous attributes include, but are not limited to, frequency, amplitude, polarization of power vs information, and splitter fraction. For example, the frequency of a transmitter's signal is a continuous attribute of the transmitter that is set by the design process.

Table 300 in FIG. 3 shows which types of design attributes are specified for each component 301 and waveguide 303. For example, a transmitter has a discrete attribute (i.e., technology), several hybrid attributes (i.e., 3D shape, 3D position, 3D orientation) and several continuous attributes (i.e., frequency, amplitude, and polarization).

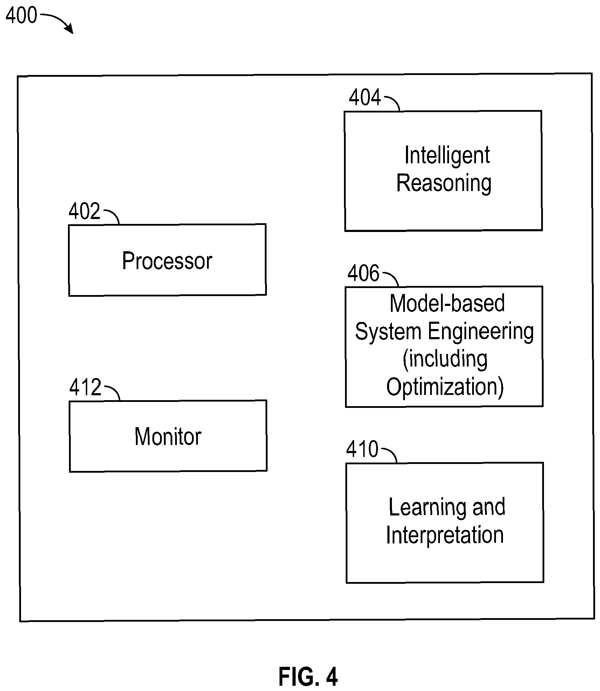

FIG. 4 shows a computer system 400 for designing architectures for design spaces, in an embodiment. The computer system 400 includes one or more processor 402 for performing the various methods disclosed herein. The one or more processor 402 can operate an intelligent reasoning module 404, a model-based system engineering module 406, (including optimization) and a learning and interpretation module 410. The processor 402 can output results of calculations to a display or monitor 412.

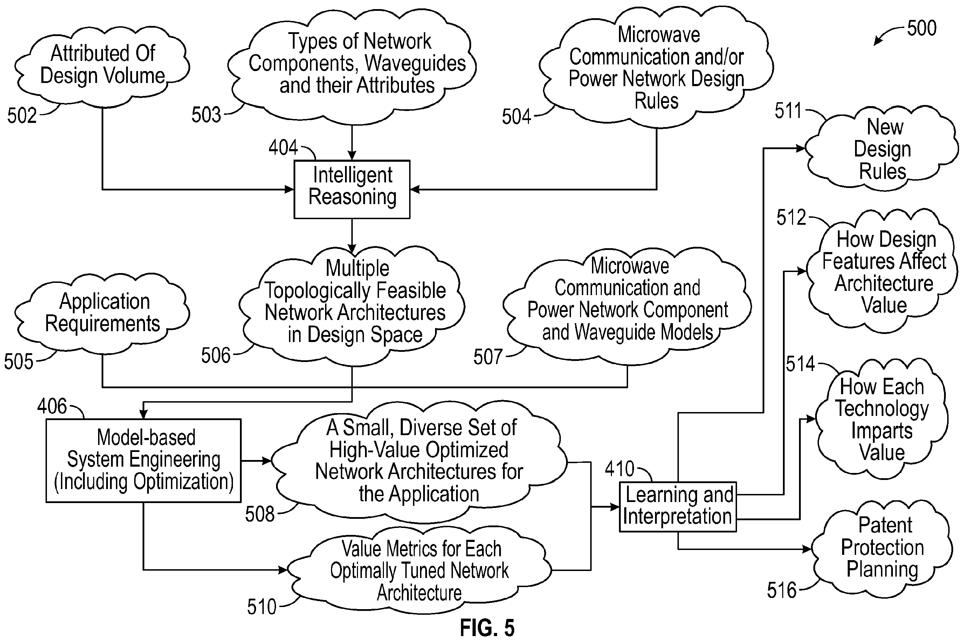

FIG. 5 shows a flow diagram 500 illustrating operation of the computer system 400 of FIG. 4 to design a microwave power and/or communication system to fit within a design volume, in an illustrative embodiment. The attributes associated with the design volume 502, obtained as part of a problem definition, are provided to the intelligent reasoning module 404. The types of network components, waveguides, and their attributes 503 (which are obtained from a database) are also provided to the intelligent reasoning module 404. Design rules 504, pertaining to the design of microwave communication and power networks are also provided to the intelligent reasoning module 404. The intelligent reasoning module 404 searches the design space to find a sparse plurality of topologically feasible architectures 506 based on the attributes of the design volume, the component and waveguide attributes, and the design rules.

The plurality of topologically feasible architectures 506, along with application requirements 505, and microwave communication and power network component and waveguide models 507, are entered into the model-based system engineering module 406, which includes the ability to perform optimization, and which outputs a reduced set of high-value optimized network architectures 508 for the application, including requirements-compliant design-variable values (i.e., component and waveguide optimal sizing, optimal waveguide 3D spatial routing and component operation), and value metrics for each optimized network architecture 508.

For each microwave communication and/or power network architecture, the network component and waveguide models apply physics that relates the component and waveguide attributes, the component and waveguide optimal sizing and operation, and the waveguide optimal 3D spatial routing, to component and waveguide value metrics. The models combine these value metrics to obtain network architecture-level value metrics 510 based on the topology of the architecture.

The reduced set of high-value optimized network architectures 508 for this application, and the architecture-level value metrics 510 for each optimized network architecture 508, can also be provided to the learning and interpretation module 410. The learning and interpretation module 410 can be used to learn new design rules 511, determine how a design choice affects network value 512, determine how each technology imparts value 514, and determine a strategy for subsequent patent-protection 516. In various embodiments, the learning and interpretation module 410 can also determine a group of architectures and learn the effects of their network design on their value, based on design features common to the group. The learning module can determine, under which circumstances, use of a particular technology or technologies, adds value to a network architecture.

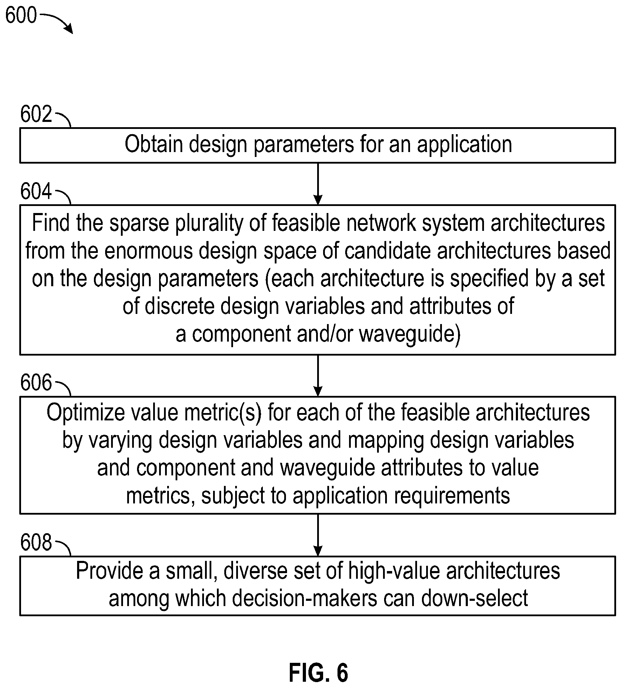

FIG. 6 shows a flowchart 600 of a method for generating a communication and power network for an application. In box 602, the design parameters for an application are obtained, such as the design volume dimensions, desired locations for its communication nodes, and design considerations, such as spaces within the design volume that are reserved for other uses, etc.

In box 604, a sparse plurality of architectures is identified from the enormous combinatorial design space for the application. The architectures are found via intelligent reasoning, by using microwave network design rules to find combinations of component and waveguides with attributes that satisfy all of the design rules. The attributes of the components and waveguides can include the dimensions of physical attributes (such as dimensions, materials, etc.), and operational attributes (such as frequency, amplitude, polarization, etc.).

In box 606, value metrics are determined for each of the architectures by varying design variables (or design parameters) including component and waveguide sizing, waveguide 3D spatial routing and component operation, subject to application requirements, and mapping design variable values and component and waveguide attributes to value metrics. The value for the architecture is a physics-based function of the value metrics of its components and waveguides, based on the topology of the network architecture and its components' and waveguides' sizing, waveguide 3D spatial routing, and component operation design variables. The value metrics for the specific components and waveguides of the architecture are used to determine an objective function for the architecture that describes a value metric for the entire architecture. This objective function can be solved (i.e., maximized or minimized) by varying component and waveguide sizing, waveguide 3D spatial routing, and component operational design variables. In box 608, a reduced set (a small, diverse set) of high-value microwave network architectures is provided for the application based on the architecture-level value metrics (to assess value) and the design variables (to assess diversity).

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for designing a microwave communication and/or power system for an application, comprising a processor (402) configured to:
obtain a design parameter for the application;
determine a plurality of architectures (506) for the application based on the design parameter and an attribute (503) of a component (301) or waveguide (303) of the architecture (506);
determine a value metric for each of the plurality of architectures (506); and
determine a reduced set of architectures (508) for the application from the plurality of architectures (506) based on the value metric.

2. The system of claim 1, wherein the processor (402) is further configured to access a database including types of components (301) and waveguides (303) for the microwave communication and/or power system and create the plurality of architectures (506) using a subset of the plurality of types of components (301) and waveguides (303) that comply with:
(i) microwave communication design rules; and/or
(ii) power network design rules.

3. The system of claim 1 or 2, wherein:
the processor (402) is further configured to determine the value metric for an architecture based on attributes (503) and design variables of the components (301) and waveguides (303) used in the architecture; and/or
the processor (402) is further configured to compute an objective function for the plurality of architectures (506) based on a function of the value metrics for the plurality of architectures (506) and determine the objective function to find the reduced set of architectures (508) based on requirements of the application.

4. The system of any preceding claim, wherein the attribute (503) of the component (301) or waveguide (303) is:
(i) a discrete attribute; or
(ii) a continuous attribute; or
(iii) a hybrid attribute.

5. The system of any preceding claim, wherein the processor (402) is further configured to select a group of architectures from the plurality of architectures (506) and determine:
(i) a new design rule; and/or
(ii) an effect of a design choice on value of the architecture; and/or
(iii) how a technology imparts value; and/or
(iv) a strategy for subsequent patent planning.

6. The system of any preceding claim, wherein the processor (402) is further configured to operate:
(i) an intelligent reasoning module (404); and/or
(ii) a model-based system engineering module (406) that performs an optimization procedure; and/or
(iii) a learning and interpretation module (410).

7. A computer network and/or power system, comprising:
a processor (402) configured to:
obtain a design parameter for an application for a microwave communication and/or power system;
determine a plurality of architectures (506) for the application based on the design parameter and an attribute (503) of a component (301) or waveguide (303) of the architecture;
determine a value metric for each of the plurality of architectures (506); and
determine a reduced set of architectures (508) for the application from the plurality of architectures (506) based on the value metric, optionally wherein:
the processor (402) is further configured to access a database including a plurality of types of components (301) and waveguides (303) for the microwave communication and/or power system and create the plurality of architectures (506) using a subset of the plurality of types of components (301) and waveguides (303) in the database that comply with:
(i) microwave communication design rules; and/or
(ii) power network design rules.

8. The computer network and/or power system of claim 7, wherein:
the processor (402) is further configured to determine the value metric for an architecture based on the design parameter and the attribute (503) of the component (301) and/or waveguide (303) used in the architecture; and/or
the processor (402) is further configured to compute an objective function for the plurality of architectures (506) based on a function of the value metrics for the plurality of architectures (506) and determine the objective function to find the reduced set of architectures (508) based on a requirement of the application.

9. The computer network and/or power system of claim 7 or 8, wherein the attribute (503) of the component (301) or waveguide (303) is:
(i) a discrete attribute; or
(ii) a continuous attribute; or
(iii) a hybrid attribute.

10. The computer network and/or power system of any of claims 7 to 9, wherein the processor (402) is further configured to select a group of architectures from the plurality of architectures (506) and determine:
(i) a new design rule; and/or
(ii) an effect of a design choice on value of the architecture; and/or
(iii) how each technology imparts value; and/or
(iv) a strategy for subsequent patent planning.

11. The computer network and/or power system of any of claims 7 to 10, wherein the processor (402) is further configured to operate:
(i) an intelligent reasoning module (404); and/or
(ii) a model-based system engineering module (406) that performs an optimization procedure; and/or
(iii) a learning and interpretation module (410).

12. A method of designing a communication system for a design space, comprising:
obtaining a design parameter for an application;
determining a plurality of architectures (506) for the application based on the design parameter and an attribute (503) of a component (301) or waveguide (303) of the architecture;
determining a value metric for each of the plurality of architectures (506); and
determining a reduced set of architectures (508) for the application from the plurality of architectures (506) based on the value metric, optionally the method further comprising:
obtaining a plurality of components (301) and waveguides (303) for the communication network and/or power system from a database and creating the plurality of architectures (506) using a subset of the plurality of components (301) and waveguides (303) in the database that comply with:
(i) a microwave communication design rule; and/or
(ii) a power network design rule.

13. The method of claim 12, further comprising:
determining the value metrics for an architecture based on the design parameter and the attribute (503) of the component (301) and waveguide (303) used in the architecture; and/or
computing an objective function for the plurality of architectures (506) based on a function of the value metrics for the plurality of architectures (506) and determining the objective function to find the reduced set of architectures (508) based on a requirement of the application.

14. The method of claim 12 or 13, wherein the attribute (503) of the component (301) or waveguide (303) is:
(i) a discrete attribute; or
(ii) a continuous attribute; or
(iii) a hybrid attribute.

15. The method of any of claims 12 to 14, further comprising selecting a group of architectures from the plurality of architectures (506) and determining:
(i) a new design rule; and/or
(ii) an effect of a design choice on value of the architecture; and/or
(iii) how each technology imparts value; and/or
(iv) a strategy for subsequent patent planning.
